# EUROPEAN PATENT APPLICATION

(11) **EP 4 632 565 A1**
(43) Date of publication of application: **15.10.2025**
(21) Application number: 25157803.5
(22) Date of filing: 13.02.2025
(51) Int. Cl.: G06F 9/451, G06F 11/36, G06F 11/3668

(54) **APPLICATION REMOTE OPERATION SYSTEM, APPLICATION EXECUTION CONTROL DEVICE, AND APPLICATION EXECUTION CONTROL METHOD**

(30) Priority: 08.04.2024 JP 2024062070
(71) Applicant: Ntt Resonant Technology Inc., Tokyo 100-0004 (JP)
(72) Inventor: HISANO, Koji, Tokyo, 1000004 (JP); TSUNODA, Kazuya, Tokyo, 1000004 (JP)
(74) Representative: Cabinet Chaillot

(57) **Abstract**

The present invention includes: a device image providing unit configured to provide a user device with a device image generated by transparentizing and overlaying a UI component, which is an HTML element related to a UI, on a background image showing the appearance of an operation target device including the UI; and an application operation control unit configured to operate a native application of the operation target device when acquiring event information of a user operation performed on the UI component from the user device, and can thereby execute an application testing of the native application installed in the operation target device by performing a user operation on the UI component overlaid on the background image through a testing tool for a website.

## Description

### BACKGROUND OF THE INVENTION

### 1. TECHNICAL FIELD

The present invention relates to an application remote operation system, an application execution control device, and an application execution control method, and is particularly suitable for use in a cloud-based platform that enables remote execution of real device testing of a native application installed in an operation target device.

### 2. DESCRIPTION OF THE RELATED ART

A cloud service has conventionally been provided that enables remote execution of real device testing of a device such as a smartphone and a tablet (see, for example, "Remote TestKit" (retrieved on 2024.3.27 from the Internet <URL:https://appkitbox.com/>). The cloud service is a service that allows a personal computer or the like used by a user to remotely operate an application installed in a device on the cloud service to enable execution of a visual inspection and an application testing similarly to a real machine.

Currently, various tools for testing an application program are provided. Roughly speaking, the tools include a testing tool for a native application (hereinafter, referred to as application) installed in a personal computer (PC) or a smartphone, and a testing tool for a website. The testing tool for an application executes a test by creating a test code using hierarchical structure information of an application UI on the basis of a user's operation on a button or the like displayed as an input element. On the other hand, the testing tool for a website executes a test by creating a test code using hierarchical structure information of a document object model (DOM) of an HTML element of a webpage.

Here, in the cloud service described above, the appearance of an entire smartphone including a display, a physical button, and the like is displayed as an image of an HTML canvas element, which does not have any hierarchical structure information. Therefore, currently, no testing tool in the market can directly execute a test on an image provided by the cloud service.

Since the testing tool for a website and the testing tool for an application use different types of hierarchical structure information, a supported target is typically limited. That is, the testing tools are classified into three types, that is, a testing tool supporting only a website, a testing tool supporting only an application, and a testing tool supporting both the website and the application. A supported OS is also typically limited. A user needs not only to select and use an appropriate tool according to the content of a test, but also to learn a method of operating a plurality of tools. Moreover, since a new model or a new OS version of a smartphone is released every day, there is the problem that a test cannot be executed or a lot of time is required to construct an environment to make a test executable in a case where a user does not have a corresponding testing tool, for example.

A technique for transparently displaying a web image on a native image to enable an operation on a web image portion has been known (see, for example, JP 2015-95256 A and JP 2018-41240 A). In an information processing apparatus described in JP 2015-95256 A, at least part of a native image and at least part of a web image are changed to transparent or translucent and overlaid one above the other, so that element images other than the background, such as icons, UI elements, text information, graphics, and thumbnail images, i.e., components of each image, are displayed at the same time without being hidden, and when a user operation of updating at least part of the web image is performed on the web image, the native image is notified of the operation.

In a display device described in JP 2018-41240 A, a web application is displayed so as to make an area for displaying a native application transparent in a display area of the web application, and the display of the native application is overlaid on the transparent area. In a case where user input is received in the display area of the native application, the display area of the web application is not changed, and the display area of the web application is displayed according to the web application after execution of the native application.

### SUMMARY OF THE INVENTION

The present invention has been made to solve the above problems, and an object thereof is to enable testing of a native application using a testing tool for a website.

In order to solve the above problems, in the present invention, a user device is provided with a device image generated by transparentizing and overlaying a UI component, which is an HTML element related to a UI, on a background image showing the appearance of an operation target device including the UI. When event information of a user operation performed on the UI component is acquired from the user device, a native application installed in the operation target device is operated on the basis of the acquired event information, and the user device is provided with a device image generated by transparentizing and overlaying the UI component on a background image in which the execution result is reflected in the appearance.

According to the present invention configured as described above, an application testing of the native application installed in the operation target device can be executed by the user operation performed on the UI component overlaid on the background image. This makes it possible to test the native application using a testing tool for a website.

### BRIEF DESCRIPTION OF THE DRAWINGS

FIG. 1 is a diagram illustrating an overall configuration example of an application remote operation system according to the present embodiment;
FIG. 2 is a block diagram illustrating a functional configuration example of a server device (application execution control device) according to the present embodiment;
FIG. 3 is a drawing illustrating an example of a background image generated by a background image generation unit of the present embodiment;
FIG. 4 is a drawing illustrating an example of a device image generated by a UI component generation unit of the present embodiment;
FIG. 5 is a drawing illustrating an example of UI hierarchy information;
FIG. 6 is a drawing illustrating an example of DOM hierarchy information;
FIG. 7 is a flowchart illustrating an overall operation example of the server device according to the present embodiment;
FIG. 8 is a flowchart illustrating an operation example of a device image providing unit according to the present embodiment;
FIG. 9 is a drawing illustrating an example of intermediate hierarchy information;
FIG. 10 is a diagram illustrating another functional configuration example of the application remote operation system according to the present embodiment; and
FIG. 11 is a diagram illustrating another functional configuration example of the application remote operation system according to the present embodiment.

### DETAILED DESCRIPTION

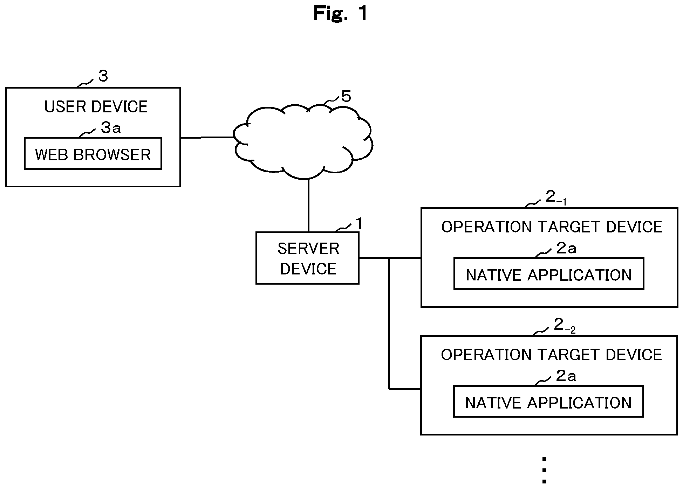

Hereinafter, an embodiment of the present invention will be described with reference to the drawings. FIG. 1 is a diagram illustrating an overall configuration example of an application remote operation system according to the present embodiment. As illustrated in FIG. 1, the application remote operation system of the present embodiment includes a server device 1 (corresponding to an application execution control device), one or more operation target devices 2₋₁, 2₋₂,... (sometimes collectively referred to as operation target device 2), and a user device 3.

The server device 1 and the operation target device 2 are connected by, for example, a wired connection such as USB or a wireless interface such as Bluetooth (registered trademark). The server device 1 and the user device 3 are connected by a communication network 5 such as the Internet and/or a mobile phone network.

The operation target device 2 includes a device incorporating an OS, for example, a smartphone, a tablet, a wearable device, or a car navigation system. In the present embodiment, the plurality of operation target devices 2₋₁, 2₋₂,... are connected to the server device 1. The plurality of operation target devices 2₋₁, 2₋₂,... are different models from each other, and various OSs, including, but not limited to Android (registered trademark), iOS (registered trademark), BlackBerry OS (BlackBerry is registered trademark), and Windows Phone (registered trademark), are installed.

The user device 3 is a device used by a user who executes an application testing of the operation target device 2, and includes, for example, a personal computer, a smartphone, or a tablet. A web browser 3a is installed in the user device 3. The user can access the server device 1 through the web browser 3a, and perform an application testing by selecting one of the plurality of operation target devices 2₋₁, 2₋₂,... through a test execution screen provided from the server device 1. At this time, the user can install any native application 2a in the operation target device 2 and execute an application testing of the native application 2a.

For example, the native application 2a is actually operated in the operation target device 2. The server device 1 provides the web browser 3a with the same image as a screen displayed on a display of the operation target device 2 at this time to cause the web browser 3a to display the image. The user device 3 remotely operates a UI provided on the screen by the native application 2a of the operation target device 2 through the image displayed on the web browser 3a. The server device 1 also provides the web browser 3a with an image showing an execution result of the native application 2a operating according to the remote operation to cause the web browser 3a to display the image.

This makes it possible for the user device 3 to remotely verify whether the native application 2a normally operates in the operation target device 2. In addition, by operating the UI through a testing tool for a website, it is possible to execute the application testing of the native application 2a according to a test code generated by recording the manual operation.

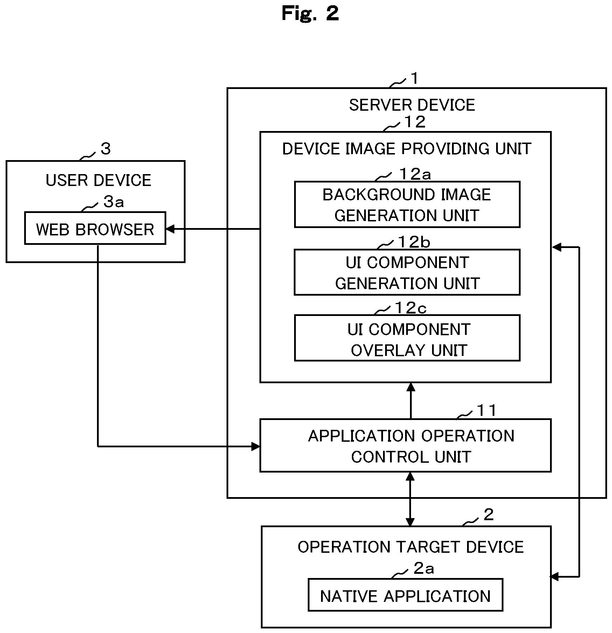

FIG. 2 is a block diagram illustrating a functional configuration example of the server device 1 (application execution control device) according to the present embodiment. As illustrated in FIG. 2, the server device 1 of the present embodiment includes an application operation control unit 11 and a device image providing unit 12 as a functional configuration. These functional blocks 11 and 12 execute processing described below by cooperation between hardware and software. For example, the processing of the above functional blocks 11 and 12 is executed by a program stored in a storage medium such as a RAM, a ROM, a hard disk, or a semiconductor memory operating under the control of a microcomputer including a CPU, a RAM, a ROM, and the like.

The application operation control unit 11 controls an operation of the native application 2a on the basis of event information regarding an operation of the native application 2a transmitted from the user device 3. For example, when acquiring event information of an operation of starting the native application 2a from the user device 3, the application operation control unit 11 executes a process of starting the native application 2a on the basis of the acquired event information.

In addition, when acquiring, from the user device 3, event information of a user operation performed on a UI component (described in detail later) included in a device image provided to the web browser 3a from the device image providing unit 12, the application operation control unit 11 causes the native application 2a to execute an operation according to an UI operation on the basis of the acquired event information. That is, when acquiring event information of a user operation detected by the web browser 3a of the user device 3 from the user device 3, the application operation control unit 11 generates virtual operation instruction information for the operation target device 2 on the basis of the acquired event information, and supplies the generated operation instruction information to the operation target device 2 to operate the native application 2a.

The device image providing unit 12 provides the web browser 3a of the user device 3 with a device image generated by transparentizing and overlaying the UI component, which is an HTML element related to the UI, on a background image showing the appearance of the operation target device 2 including the UI. The UI included in the operation target device 2 is an UI provided by the native application 2a installed in the operation target device 2. The background image showing the appearance of the operation target device 2 is, for example, an image captured by a camera from a position where the operation target device 2 is viewed from the front, and may include a physical button of the operation target device 2. As the background image showing the appearance of the operation target device 2, an image directly acquired from the inside through an interface included in the operation target device 2 or a screenshot image of the screen displayed on the display of the operation target device 2 may be used.

In a case where the application operation control unit 11 executes the operation of the native application 2a, the device image providing unit 12 provides the user device 3 with a device image generated by transparentizing and overlaying the UI component on a background image in which the execution result is reflected in the appearance. In a case where the image captured by the camera is used as the background image showing the appearance of the operation target device 2, when the operation of the native application 2a has been executed by the application operation control unit 11, the device image providing unit 12 is notified that and controls the camera to capture the appearance of the operation target device 2. The device image providing unit 12 provides the user device 3 with the device image generated by overlaying the transparentized UI component on the background image acquired by capturing the appearance. In a case where the image acquired from the inside or the screenshot image of the operation target device 2 is used as the background image showing the appearance of the operation target device 2, when the operation of the native application 2a has been executed by the application operation control unit 11, the device image providing unit 12 is notified that and controls the operation target device 2 to acquire the image. The device image providing unit 12 provides the user device 3 with the device image generated by overlaying the transparentized UI component on the acquired background image.

As illustrated in FIG. 2, the device image providing unit 12 includes, as a more specific functional configuration, a background image generation unit 12a that generates the background image, a UI component generation unit 12b that generates the UI component, and a UI component overlay unit 12c that transparentizes and overlays the UI component on the background image.

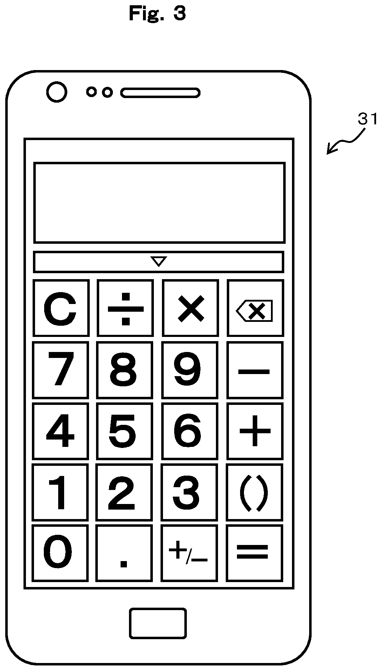

As described above, the background image generation unit 12a generates the background image by capturing the operation target device 2 with, for example, a camera installed at a position where the operation target device 2 is viewed from the front. The background image generation unit 12a transmits the generated background image to the web browser 3a of the user device 3 to cause the web browser 3a to display the background image. FIG. 3 is a drawing illustrating an example of the background image generated by the background image generation unit 12a. Here, an example of a background image 31 in a state where the native application 2a as a calculator is started and an operation screen is displayed is illustrated.

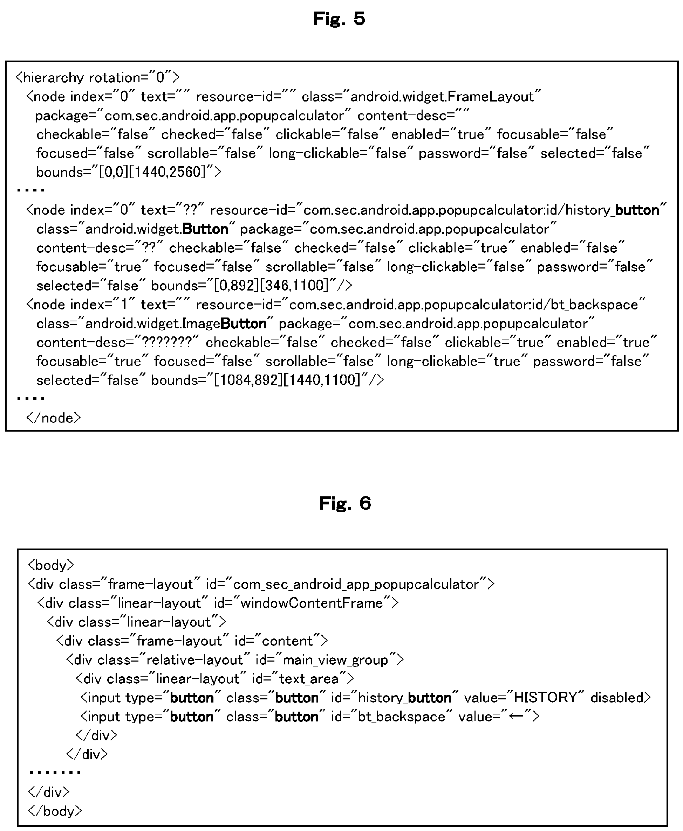

The UI component generation unit 12b converts UI hierarchy information of the native application 2a acquired from the operation target device 2 into DOM hierarchy information of an HTML element, and generates the UI component that is the HTML element related to the UI on the basis of the DOM hierarchy information. The UI hierarchy information is a UI library obtained by modeling a plurality of UIs included in the native application 2a as a tree structure, and is created in a unique data format according to the OS of the operation target device 2. For example, in the case of Android, the UI hierarchy information is created in XML format. FIG. 5 is a drawing illustrating an example of the UI hierarchy information. On the other hand, the DOM hierarchy information is a UI library obtained by modeling a plurality of UIs included in the native application 2a using HTML elements. FIG. 6 is a drawing illustrating an example of the DOM hierarchy information.

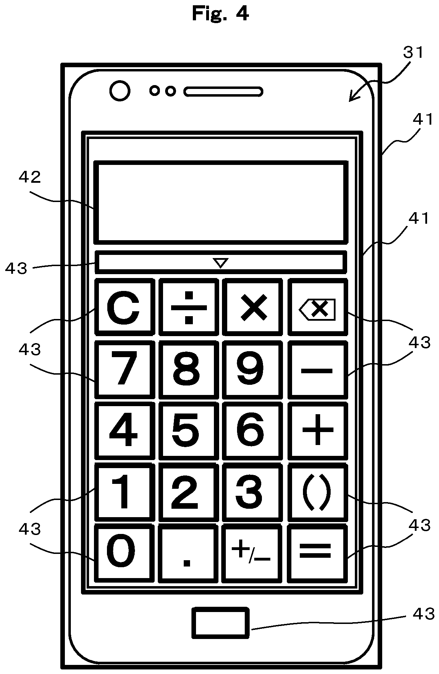

The UI component overlay unit 12c transparentizes the UI component generated by the HTML element of the DOM hierarchy information by the UI component generation unit 12b, and overlays the UI component on the background image displayed on the web browser 3a by the background image generation unit 12a to cause the web browser 3a to display the UI component. FIG. 4 is a drawing illustrating an example of the device image generated by overlaying the transparentized UI component on the background image. Here, an example is illustrated in which a div element 41, an input element 42, and a button element 43 of HTML are overlaid on the background image 31 of a state where the native application 2a as a calculator is started and the operation screen is displayed. In FIG. 4, the UI component is indicated by a thick frame for the sake of description, but is actually transparent and invisible to the user. That is, the appearance is the same as that in FIG. 3.

The user of the user device 3 can operate the input element 42 or the button element 43 individually through, for example, a testing tool for a website. The testing tool for a website is a tool capable of recording a manual operation on the UI component, adjusting a test script on the basis of the record, executing a test, and generating a report of the execution result.

For example, when the user operates any button element 43, the web browser 3a detects the operation, and transmits event information of the user operation generated using JSON-RPC or the like to the server device 1. When acquiring the event information of JSON-RPC or the like from the user device 3, the application operation control unit 11 of the server device 1 converts the event information into an agent event suitable for the system of an agent included in the server device 1. Subsequently, the application operation control unit 11 generates virtual operation instruction information for the operation target device 2 on the basis of the agent event by cooperation between the agent in the server device 1 and a background service in the operation target device 2, and supplies the generated operation instruction information to the operation target device 2 to operate the native application 2a.

After the application operation control unit 11 executes the operation of the native application 2a, the background image generation unit 12a generates the background image in which the execution result is reflected in the appearance, and transmits the background image to the web browser 3a of the user device 3 to cause the web browser 3a to display the background image. The UI component generation unit 12b generates the UI component in the same procedure as described above. The UI component overlay unit 12c transparentizes the UI component generated by the UI component generation unit 12b, and overlays the UI component on the background image displayed on the web browser 3a by the background image generation unit 12a to cause the web browser 3a to display the UI component.

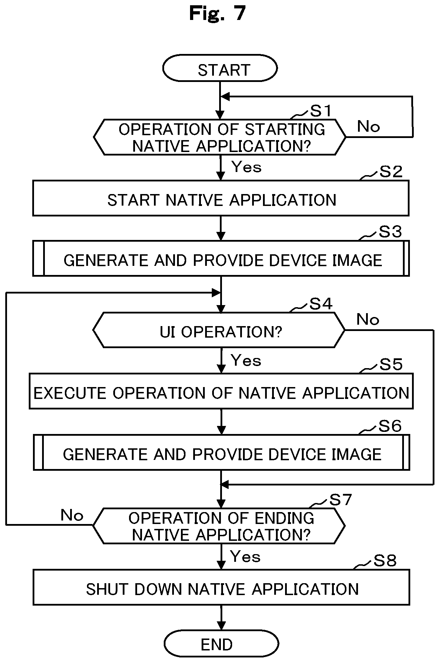

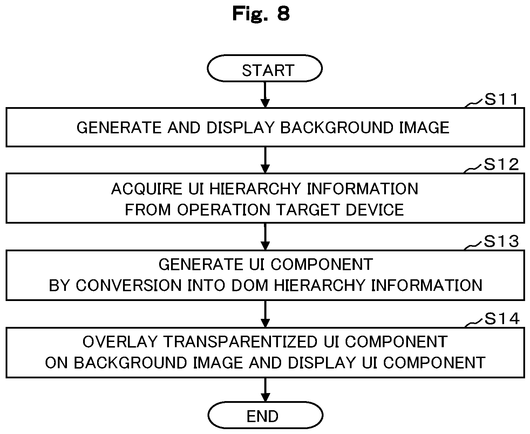

FIGS. 7 and 8 are flowcharts illustrating an operation example of the server device 1 according to the present embodiment configured as described above. FIG. 7 illustrates an overall operation example of the server device 1, and FIG. 8 illustrates an operation example of the device image providing unit 12.

In FIG. 7, the application operation control unit 11 determines whether or not the event information of the operation of starting the native application 2a has been acquired from the web browser 3a of the user device 3 (step S1). Here, when acquiring the event information of the application starting operation, the application operation control unit 11 executes the process of starting the native application 2a on the basis of the acquired event information (step S2).

The device image providing unit 12 provides the web browser 3a with the device image generated by transparentizing and overlaying the UI component, which is the HTML element related to the UI, on the background image showing the appearance including an initial screen (including the UI) displayed by starting the native application 2a (step S3). Details of this processing are illustrated in the flowchart of FIG. 8.

Thereafter, the application operation control unit 11 determines whether or not the event information of the user operation performed on the UI component has been acquired from the user device 3 (step S4). Here, in a case where the event information of the UI operation has not been acquired, the process proceeds to step S7. On the other hand, in a case where the event information of the UI operation has been acquired, the application operation control unit 11 executes the process of causing the native application 2a to execute the operation according to the UI operation on the basis of the acquired event information (step S5).

When the application operation control unit 11 executes the operation of the native application 2a, the device image providing unit 12 provides the web browser 3a of the user device 3 with the device image generated by transparentizing and overlaying the UI component on the background image in which the execution result is reflected in the appearance (step S6). The processing performed here is similar to the processing of step S3, and details thereof are illustrated in the flowchart of FIG. 8. Thereafter, the process proceeds to step S7.

In step S7, the application operation control unit 11 determines whether or not event information of an operation of ending the native application 2a has been acquired from the web browser 3a of the user device 3. Here, in a case where the event information of the application ending operation has not been acquired, the process returns to step S4. On the other hand, in a case where the event information of the application ending operation has been acquired, the application operation control unit 11 executes a process of shutting down the native application 2a on the basis of the acquired event information (step S8), and ends the process of the flowchart illustrated in FIG. 7.

In FIG. 8, the background image generation unit 12a generates the background image by, for example, controlling the camera to capture the appearance of the operation target device 2, and transmits the generated background image to the web browser 3a to cause the web browser 3a to display the background image (step S11). Subsequently, the UI component generation unit 12b acquires the UI hierarchy information of the native application 2a from the operation target device 2 (step S12), converts the acquired UI hierarchy information into the DOM hierarchy information of the HTML element, and generates the UI component on the basis of the converted DOM hierarchy information (step S13). Subsequently, the UI component overlay unit 12c transparentizes the UI component generated by the UI component generation unit 12b, and overlays the UI component on the background image to cause the web browser 3a to display the UI component (step S14).

As described above in detail, the server device 1 of the present embodiment provides the user device 3 of the test executor with the device image generated by transparentizing and overlaying the UI component, which is the HTML element related to the UI, on the background image showing the appearance of the operation target device 2 including the UI. When the event information of the user operation performed on the UI component is acquired from the user device 3, the native application 2a installed in the operation target device 2 is operated on the basis of the acquired event information, and the user device 3 is provided with the device image generated by transparentizing and overlaying the UI component on the background image in which the execution result is reflected in the appearance.

According to the present embodiment configured as described above, the application testing of the native application 2a installed in the operation target device 2 can be executed by performing the user operation on the UI component overlaid on the background image through the testing tool for a website. This makes it possible to test the native application 2a using the testing tool for a website.

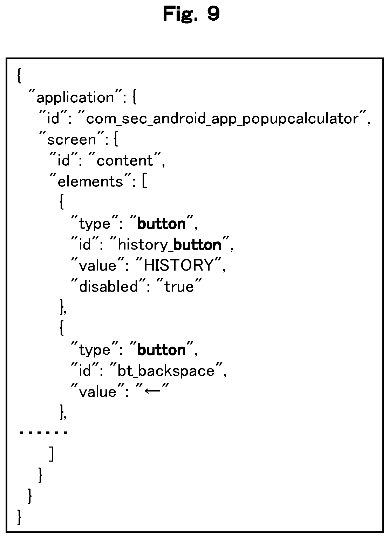

In the above embodiment, an example has been described in which the UI hierarchy information having a different structure depending on the OS of the operation target device 2 is directly converted into the DOM hierarchy information of the HTML element. However, the present invention is not limited to this example. For example, the UI component generation unit 12b may convert the UI hierarchy information of the native application 2a dependent on the OS of the operation target device 2 into intermediate hierarchy information independent of the OS of the operation target device 2, and then convert the intermediate hierarchy information into the DOM hierarchy information of the HTML element. FIG. 9 is a drawing illustrating an example of the intermediate hierarchy information. Here, an example of a case where the intermediate hierarchy information is configured in JSON format is illustrated.

In the case of conversion into the intermediate hierarchy information, the UI component generation unit 12b may optimize the intermediate hierarchy information by combining, with the intermediate hierarchy information, text information generated by optical character recognition (OCR) of the background image (the captured image showing the appearance of the operation target device 2) generated by the background image generation unit 12a, and convert the optimized intermediate hierarchy information into the DOM hierarchy information.

Depending on the native application 2a to be tested, characters and numbers displayed on the UI may be represented by images instead of text information. In this case, information corresponding to characters and numbers displayed by images may be missing in the intermediate hierarchy information converted from the UI hierarchy information. The above-described optimization processing is a process of complementing the missing characters and numbers in the intermediate hierarchy information converted from the UI hierarchy information with the text information recognized by performing OCR processing on the captured image of the operation target device 2.

Such optimization processing can be executed for the UI hierarchy information. However, since the UI hierarchy information has various different structures depending on the OS of the operation target device 2, it is necessary to create an algorithm for performing the optimization processing for each OS. On the other hand, performing the optimization processing on the intermediate hierarchy information independent of the OS after the conversion into the intermediate hierarchy information provides an advantage that it is only necessary to prepare one algorithm for performing the optimization processing.

The application remote operation system of the present embodiment is suitably applied to a use case in which the application testing of the native application 2a is performed by remotely operating the operation target device 2, but can also be applied to a use case other than the test.

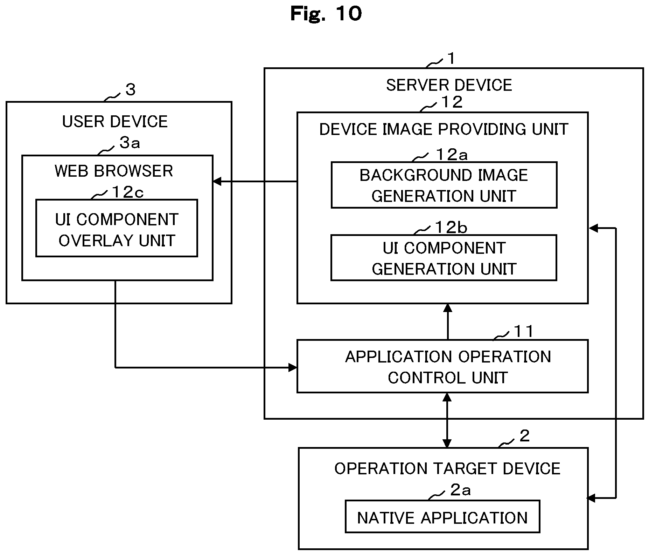

In the above embodiment, a configuration example has been described in which the server device 1 has all the functions of the device image providing unit 12 and the application operation control unit 11. However, the user device 3 may have some or all of these functions. For example, as illustrated in FIG. 10, the web browser 3a of the user device 3 may have the function of the UI component overlay unit 12c.

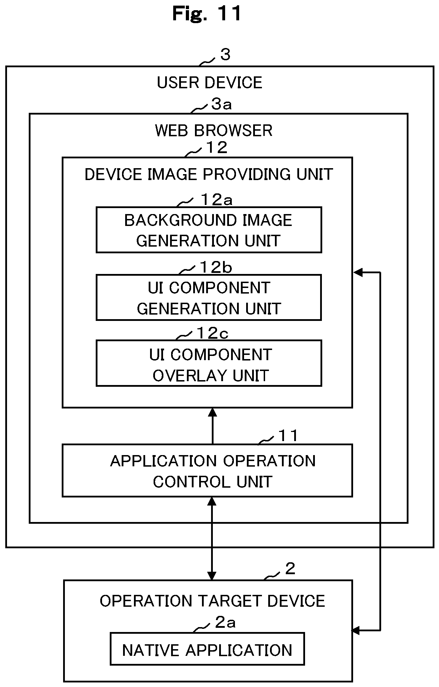

Alternatively, as illustrated in FIG. 11, the web browser 3a of the user device 3 may have all the functions of the device image providing unit 12 and the application operation control unit 11. In this case, the server device 1 is omitted, and the user device 3 and the operation target device 2 are connected via the communication network 5. For example, by providing the web browser 3a with an application programming interface (API) for directly operating a USB device, the operation target device 2 can be remotely operated directly from the web browser 3a, and all the functions of the device image providing unit 12 and the application operation control unit 11 can be implemented in the web browser 3a.

In addition, each of the above embodiments is merely an example of implementation in implementing the present invention, and the technical scope of the present invention should not be interpreted in a limited manner. That is, the present invention can be implemented in various forms without departing from the gist or main features thereof.

## Claims

1. An application remote operation system comprising:
a device image providing unit (12) configured to provide a user device (3) with a device image generated by transparentizing and overlaying a user interface (UI) operation element, which is a hypertext markup language (HTML) element related to a UI, on a background image showing an appearance of an operation target device (2) including the UI; and
an application operation control unit (11) configured to acquire, from the user device (3), event information of a user operation performed on the UI component, and operate a native application (2a) installed in the operation target device (2) on a basis of the acquired event information,
wherein in a case where the application operation control unit (11) executes an operation of the native application (2a), the device image providing unit (12) provides the user device (3) with a device image generated by transparentizing and overlaying the UI component on a background image in which a result of the execution is reflected in the appearance.

2. The application remote operation system according to claim 1, wherein the application operation control unit (11) acquires event information of the user operation detected by a web browser (3a) of the user device (3) from the user device (3), generates virtual operation instruction information for the operation target device (2) on a basis of the acquired event information, and supplies the generated operation instruction information to the operation target device (2) to operate the native application (2a).

3. The application remote operation system according to claim 1 or 2, wherein
the device image providing unit (12) includes:
a background image generation unit (12a) configured to generate the background image;
a UI component generation unit (12b) configured to generate the UI component; and
a UI component overlay unit (12c) configured to transparentize and overlay the UI component on the background image, and
the UI component generation unit (12b) converts UI hierarchy information of the native application (2a) into document object model (DOM) hierarchy information of the HTML element, and generates the UI component on a basis of the DOM hierarchy information.

4. The application remote operation system according to claim 1 or 2, wherein
the device image providing unit (12) includes:
a background image generation unit (12a) configured to generate the background image;
a UI component generation unit (12b) configured to generate the UI component; and
a UI component overlay unit (12c) configured to transparentize and overlay the UI component on the background image, and
the UI component generation unit (12b) converts UI hierarchy information of the native application (2a) into intermediate hierarchy information independent of an operating system of the operation target device (2), then converts the intermediate hierarchy information into document object model (DOM) hierarchy information of the HTML element, and generates the UI component on a basis of the DOM hierarchy information.

5. The application remote operation system according to claim 4, wherein the UI component generation unit (12b) optimizes the intermediate hierarchy information by combining, with the intermediate hierarchy information, text information generated by optical character recognition of the background image generated by the background image generation unit (12a), and converts the optimized intermediate hierarchy information into DOM hierarchy information of the HTML element.

6. An application execution control device comprising:
a device image providing unit (12) configured to provide a user device (3) with a device image generated by transparentizing and overlaying a user interface (UI) operation element, which is a hypertext markup language (HTML) element related to a UI, on a background image showing an appearance of an operation target device (2) including the UI; and
an application operation control unit (11) configured to acquire, from the user device (3), event information of a user operation performed on the UI component, and operate a native application (2a) installed in the operation target device (2) on a basis of the acquired event information,
wherein in a case where the application operation control unit (11) executes an operation of the native application (2a), the device image providing unit (12) provides the user device (3) with a device image generated by transparentizing and overlaying the UI component on a background image in which a result of the execution is reflected in the appearance.

7. An application execution control method comprising:
a first step, by a device image providing unit (12) of an application execution control device, of providing a user device (3) with a device image generated by transparentizing and overlaying a user interface (UI) operation element, which is a hypertext markup language (HTML) element related to a UI, on a background image showing an appearance of an operation target device (2) including the UI;
a second step, by an application operation control unit (11) of the application execution control device, of acquiring, from the user device (3), event information of a user operation performed on the UI component, and operating a native application (2a) installed in the operation target device (2) on a basis of the acquired event information; and
a third step, by the device image providing unit (12), of providing the user device (3) with a device image generated by transparentizing and overlaying the UI component on a background image in which a result of executing the native application (2a) is reflected in the appearance.
